# EUROPEAN PATENT SPECIFICATION

(11) **EP 1 166 562 B1**
(45) Date of publication and mention of the grant of the patent: **29.06.2011**
(21) Application number: 01900052.0
(22) Date of filing: 04.01.2001
(51) Int. Cl.: H04N 7/173, H04N 7/167, H04N 7/16

(54) **DIGITAL CONTENT DELIVERY SYSTEM AND METHOD**
SYSTEM UND VERFAHREN ZUR ÜBERMITTLUNG VON DIGITALEN INHALTEN
SYSTEME ET PROCEDE DE DISTRIBUTION DE CONTENU NUMERIQUE

(30) Priority: 05.01.2000 US 174530 P; 06.04.2000 US 195032 P
(43) Date of publication of application: 02.01.2002
(60) Divisional application: 07013155.2
(73) Proprietor: NDS Limited, Staines, Middlesex TW18 4EX (GB)
(72) Inventor: SHEN-ORR, Chaim D. NDS Technologies Israel Ltd., 91235 Jerusalem (IL); HIBSHOOSH, Eli NDS Technologies Israel Ltd., 91235 Jerusalem (IL); EPSTEIN, Steve NDS Technologies Israel Ltd., 91235 Jerusalem (IL); WALD, Stephanie NDS Technologies Israel Ltd., 91235 Jerusalem (IL); BELENKY, Yaakov NDS Technologies Israel Ltd., 91235 Jerusalem (IL); SHAPIRO, Yigal NDS Technologies Israel Ltd., 91235 Jerusalem (IL)
(74) Representative: White, Duncan Rohan
(86) International application number: PCT/IL2001/000013
(87) International publication number: WO 2001/050755

(56) References cited:
- EP-A- 0 714 204
- EP-A- 0 912 052
- WO-A-99/18729
- WO-A1-01/15448
- WO-A1-01/15448
- "FUNCTIONAL MODEL OF A CONDITIONAL ACCESS SYSTEM", EBU REVIEW- TECHNICAL, EUROPEAN BROADCASTING UNION. BRUSSELS, BE, no. 266, 21 December 1995 (1995-12-21), pages 64-77, XP000559450, ISSN: 0251-0936
- "FUNCTIONAL MODEL OF A CONDITIONAL ACCESS SYSTEM" EBU TECHNICAL REVIEW, no. 266, 1995, pages 64-77, XP000559450 Grand-Saconnex, CH
- GUILLOU L C; GIACHETTI J-L: "ENCIPHERMENT AND CONDITIONAL ACCESS" SMPTE JOURNAL, vol. 103, no. 6, June 1994 (1994-06), pages 398-406, XP000457575 SCARSDALE, N.Y, US

## Description

### FIELD OF THE INVENTION

The present invention relates to a system and a method for digital content delivery, and in particular, to such a system and method which enable such digital content to be securely delivered with a mechanism for assured payment.

### BACKGROUND OF THE INVENTION

Digital content can easily and efficiently be delivered through any type of suitable network, such as a cable network and/or a computer network. In particular, digital content can be efficiently delivered to individual users upon request, thereby enabling users to receive personalized content "on demand". Such personalization is particularly useful for digital content for display and/or playback through various types of media devices, such as video data and audio data, in which the taste of the user is highly individualized. For example, users could select individual portions of music, television programs, movies and other types of entertainment, and receive these selections as digital content.

However, in order for digital content to be fully effectively delivered to users, a number of mechanisms need to be provided. First, if payment is required, then the digital content should be secure against theft, such that only authorized users can retrieve and display the digital content. Second, the user should also easily be able to effect payment where required, in order to encourage proper payment and usage. Third, neither of these mechanisms should interfere with the efficient delivery and display/playback of the digital content. Fourth, the authorized user should also optionally be permitted to play back or otherwise display the digital content more than once, while still preventing unauthorized users from gaining access to the digital content. In addition, users should be able to use digital content in substantially the same manner in which analog content is presently used. For example, users should be able to keep a reasonable number of copies to be used by the same person at different locations, such as at home, in the automobile, at the office and so forth. In addition, such copies should be usable by a reasonable, limited number of family members.

One attempt to provide such effective mechanisms is described in US Patent Nos. 5,282,249 and 5,481,609, which are hereby incorporated by reference as if fully set forth herein. The disclosed system enables an analog signal containing media content to be broadcast widely, yet only to be played back or otherwise displayed by authorized users. This signal could contain a television program for example. The signal is scrambled, such that the authorized users are able to unscramble the signal and play back or otherwise display the media content only with the proper security device, such as a smart card for example. Thus, widely received media content is still protected from access by unauthorized users.

Another attempted solution is described in published European Patent Application No. EP 0858184, which discloses a digital recording protection system and which is hereby incorporated by reference as if fully set forth herein. The disclosed system enables the digital content to be sent in a scrambled format, such that the digital content cannot be read and/or displayed without a key. The key is obtained from a control message, which is only sent to authorized users. Preferably, the key is obtained from coded information contained within the Entitlement Control Message, or ECM, for generating a code word associated with the ECM. Thus, only authorized users are able to correctly read and/or display the digital content.

In addition, the system and method described in European Patent Application No. EP 0858184 enable the authorized user to record and playback or otherwise display the digital content, while preventing the user from producing and distributing multiple playable copies of the digital content to other, non-authorized users. Therefore, the authorized user is able to fully use and enjoy the digital content, while the content itself is still protected from unauthorized use.

As described in European Patent Application No. EP 0858184, and as shown in background art Figure 1 taken from this Application, such a system includes a media device **100,** such as a television set, for playing the digital content, such as a television program for example. Media device **100** is connected to an integrated receiver-decoder (IRD) **110,** for receiving and decoding the scrambled digital content. The system also features a removable security element **120,** such as a smart card for example, for providing control words for unscrambling, or otherwise rendering into a clear format, the scrambled digital content by IRD **110.** In addition, the system features a digital VCR **130** for communicating with media device **100** and IRD **110.** Digital VCR **130** is able to record the digital content for later playback and/or display by media device **100.**

IRD **110** receives scrambled digital content which features a plurality of ECMs, each of which is associated with, and is typically followed by, a scrambled digital data segment, containing the actual digital content. Each ECM includes coded information which can be used to generate a code word for unscrambling the associated scrambled digital data segment. Typically, removable security element **120** generates the code word. IRD **110** is then able to unscramble the scrambled digital content, for example for being played by media device **100.**

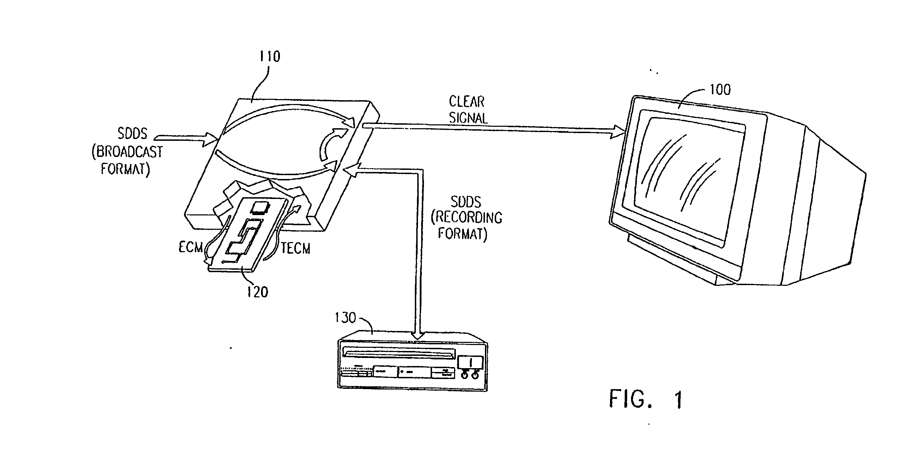

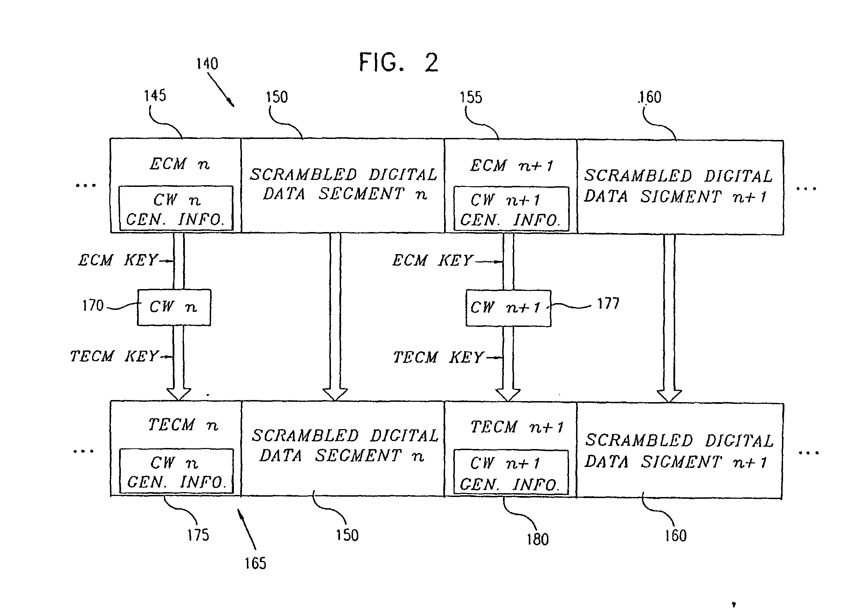

Background art Figure 2, also taken from European Patent Application No. EP 0858184, is a flow diagram illustrating the production of the scrambled digital content. As shown, the scrambled digital content is produced as an SDDS (scrambled digital data stream) 140, featuring a plurality of ECMs such as an nth ECM 145, and a plurality of associated SDSEGs such as an nth SDSEG (scrambled digital data segment) 150 which is associated with nth ECM 145. IRD 110 of Figure1, in cooperation with removable security element 120, is able to use SDDS 140 in order to form a recording SDDS 165. Recording SDDS 165 is produced with the addition of a TECM (transformed ECM) key, which is permanently associated with the system of Figure1, even if removable security element 120 is changed, replaced or exchanged, for example. This TECM key is used to make a pluralityof TECMs, shown as nth TECM 175, from the code words of the ECMs. Thus, a system which did not feature the correct TECM key could not unscramble the recording SDDS 165 for playing back or otherwise displaying the digital content, while the authorized user is always able to play back or otherwise display the recorded digital content as long as the TECM key is available.

WO-A-01/15448 (published 1 March 2001) discloses a video on demand service that is facilitated by encrypting content such as a movie in accordance with a one or more control words protected by a program key. An MPEG compliant transport mechanism is used and the program key is encrypted and contained in an ECM. The ECMs are transmitted to a user's STB for a limited time defining a service acquisition window.

None of the disclosed background art solutions permits a payment mechanism to be incorporated into the security system. Furthermore, none of the references teaches or discloses an automated payment mechanism, which could for example, enable authorized users to both transmit digital content to other users, and to pay for such content, as well as enabling users to purchase digital content automatically. Also, none of the references teaches or discloses a secure device for unscrambling the digital content while simultaneously protecting such content from unauthorized content or "hacking" at the time of play back or other display. Thus, although the background art systems fulfil a portion of the requirement for a flexible yet secure digital content protection system, they do not complete fulfil the need for such a system.

Therefore, there is an unmet need for, and it would be highly useful to have, a system and a method for secure digital content delivery, which enables payment for content to be automatically effected, yet which enables the authorized user to access the digital content more than once.

The invention provides a method for securing digital content for transmission to an end user in accordance with claim 1 and a system for securing digital content for transmission as claimed in claim 9.

The present invention fulfils these needs by providing a system and a method for flexible, yet secure distribution of digital content items, optionally with an automatic payment mechanism for purchasing such content. The present invention supports the distribution of content to end user devices from one or more central distribution points, as in client-server models and variations thereof, and/or peer-to-peer distribution, for example between end user devices. In addition, the present invention also supports distribution models within either of these mechanisms for unitary distribution, to a specified end user device, or broadcast/multicast distribution, to a plurality of end user devices. In any case, in order for the distributed content to be operative, for example to be "played back" or otherwise displayed, the recipient end user device must have been in communication with a network control centre at least once before such a display is permitted. The network control centre then enables the recipient end user device to play back or otherwise display the received content, for example by sending a code to the recipient end user device. Optionally, the network control centre may require payment to be received before enabling the content for the recipient end user device. Thus, the present invention supports flexible distribution of content according to a number of different distribution models, while still preventing unauthorized play back or other display throughout the lifecycle of the digital content item, and optionally enabling assured payments:
According to preferred embodiments of the present invention, there is provided a combination of secure hardware and software to prevent and/or at least retard unauthorized access or "hacking". In order for access to the distributed content to be controlled, the content itself must be protected, for example by encryption or scrambling. Hereinafter, the term "scrambling" is considered to encompass both encryption, which involves the mathematically determined alteration of content or even only a part thereof to a form which cannot be read without the proper key, and a simpler form of scrambling, which involves the rearrangement of portions of the content, such that the content is only readable when properly rearranged. Indeed, even the simpler forms of scrambling can be effectively performed by altering, or otherwise rendering inaccessible, a small percentage of the overall content, after which the entire unit of content can no longer be displayed. By protecting the content itself, the present invention enables the content to be completely portable, and to be distributed freely, while still ensuring that control of access to the content is maintained by a central authority.

The preferred combination of hardware and software components enables the present invention to most effectively protect access to the content, while still enabling the user to easily and transparently play back, or otherwise display, the content. More preferably, the end user device which is used for the present invention includes a security module, for unscrambling the scrambled content according to a received code. The security module optionally and more preferably features a renewable security sub-module, such as a smart card for example. The security module receives the necessary code from the network control centre, and is then able to unscramble the received content for play back or other display. Most preferably, the operation of the security module is transparent or substantially transparent to the end user.

The end user device is preferably in communication with a network control center through a network, which could be the Internet for example, but which could also be a cable network and/or satellite communication, for example. Alternatively, the end user device is in communication with the network control center indirectly, for example through the use of a portable storage medium such as a CD-ROM for example, which could optionally be sent to the end user for distribution of content and/or codes, for example.

According to the present invention, there is provided a method and a system for flexible and secure transmission of digital content to an end user device as defined in the appended claims.

Hereinafter, the terms "file", "portion" or "item", with regard to digital content, are used interchangeably and refer to any unit of data for such digital content, whether as a functional unit such as a packet for example, or as a conceptual unit such as a television program for example.

Hereinafter, the term "display" refers to any type of playback or playing out of media content data for a user, including but not limited to, the audible production of audio data and the visible production of video data, and combinations thereof.

Hereinafter, the term "network" refers to a connection between any two or more computational or other electronic devices which permits the transmission of data.

Hereinafter, the term "computational device" includes any type of digital instrument which is capable of operating a software program.

For the present invention, a software application could be written in substantially any suitable programming language, which could easily be selected by one of ordinary skill in the art. The programming language chosen should be compatible with the computational device according to which the software application is executed. Examples of suitable programming languages include, but are not limited to, C, C++, Java and Assembly.

In addition, the present invention could be implemented as software, firmware or hardware, or as a combination thereof. For any of these implementations, the functional steps performed by the method could be described as a plurality of instructions performed by a data processor.

### BRIEF DESCRIPTION OF THE DRAWINGS

The invention is herein described, by way of example only, with reference to the accompanying drawings, wherein:
FIG. 1 is a schematic block diagram of a background art system;
FIG. 2 shows a flow diagram illustrating the production of the scrambled digital content according to the background art;
FIG. 3 is a schematic block diagram of a system according to the present invention for secure and yet flexible delivery of digital content;
FIG. 4 is a schematic block diagram of a more detailed exemplary version of the system according to Figure 3;
FIG. 5 is a schematic block diagram of a secure module according to the present invention;
FIG. 6 shows a background art four bit digital to analog converter (DAC);
FIG. 7 shows a modification of an element of Figure 6 according to the present invention; and
FIG. 8 shows an exemplary secure DAC according to the present invention.

### DESCRIPTION OF THE PREFERRED EMBODIMENTS

The present invention is of a system and a method for flexible, yet secure distribution of digital content items, optionally with an automatic payment mechanism for purchasing such content. The present invention supports the distribution of content to end user devices from one or more central distribution points, as in client-server models and variations thereof, and/or peer-to-peer distribution, for example between end user devices. In addition, the present invention also supports distribution models within either of these mechanisms for unitary distribution, to a specified end user device, or broadcast/multicast distribution, to a plurality of end user devices. In any case, in order for the distributed content to be operative, for example to be "played back" or otherwise displayed, the recipient end user device must have been in communication with a network control center at least once before the content can be so displayed. It should be noted that optionally such contact may be performed at the time of manufacture of the end user device.

The network control center then enables the recipient end user device to play back or otherwise display the received content, for example by sending a code or other permission message to the recipient end user device. Optionally, the network control center may require payment to be received before enabling the content for the recipient end user device. Thus, the present invention supports flexible distribution of content according to a number of different distribution models, while still preventing unauthorized play back or other display throughout the lifecycle of the digital content item, and optionally enabling assured payments.

According to preferred embodiments of the present invention, there is provided a combination of secure hardware and software to prevent and/or at least retard unauthorized access or "hacking". In order for access to the distributed content to be controlled, the content itself must be protected, for example by encryption or scrambling. Hereinafter, the term "scrambling" is considered to encompass both encryption, which involves the mathematically determined alteration of content to a form which cannot be read without the proper key, and a simpler form of scrambling, which involves the rearrangement of portions of the content, such that the content is only readable when properly rearranged. By protecting the content itself, the present invention enables the content to be completely portable, and to be distributed freely, while still ensuring that control of access to the content is maintained by a central authority.

The security of the content is more preferably provided through several basic rules. First, preferably all digital content is encrypted or otherwise scrambled throughout the system, except when being received by the network control center for distribution to the end user device, and at the last physical point immediately prior to actual physical use (play back or other display of the content) at the end user device. For example, with regard to audio data, that point would be the creation of the analog voltage signal for transmission to the analog amplifiers. The physical construction of the integrated circuits handling the digital content at the end user device is more preferably performed such that decryption or unscrambling of the content is only available at that point and such that "clear" or unscrambled content cannot be transmitted outside of the end user device.

According to preferred embodiments of the present invention, the digital content is scrambled before being transmitted to the end user device by a broadcast unit at the network control center. The scrambled digital content can then preferably only be unscrambled by the end user device with the correct key. The key is preferably distributed through an ECM (control message), which more preferably enables the end user device to create the correct key and as such may be considered to be an example of a permission message. Optionally, the ECM is broadcast to all end user devices, but the particular end user device is more preferably only able to generate the key if this end user device also receives an EMM, or entitlement message, from the network control center. Thus, the key, or information required to generate the key, may optionally be broadcast, while the ability to use such a key is preferably still controlled by the network control center, through the distribution of some type of permission message for example.

Optionally and most preferably, a more permanent key, or at least the ability to generate such a more permanent key, is also distributed by the control center to a particular, individual end user device. Most preferably, this capability is distributed through a PECM (personal ECM), which is received by the end user device from the control center and provides the permanent capability to access the digital content. Optionally and most preferably, the PECM then replaces the ECM, such that only the PECM is then required for access and display of the digital content. The PECM can be considered to be another example of the permission message.

The preferred combination of hardware and software components enables the present invention to most effectively protect access to the content, while still enabling the user to easily and transparently play back, or otherwise display, the content. More preferably, the end user device which is used for the present invention includes a security module, for unscrambling the scrambled content according to a received code. The security module optionally and more preferably features a renewable security submodule, such as a smart card for example. The renewable security submodule is itself preferably secured, such that information contained within this submodule is protected from unauthorized access. The security module receives the necessary code from the network control center, and is then able to unscramble the received content for play back or other display. Most preferably, the operation of the security module is transparent or substantially transparent to the end user.

The end user device is preferably in communication with the network control center through a network, which could be the Internet for example, but which could also be a cable network and/or satellite communication, for example. Alternatively, the end user device is in communication with the network control center indirectly, for example through the use of a portable storage medium such as a CD-ROM for example, which could optionally be sent to the end user for distribution of content and/or codes, for example.

The present invention also preferably encompasses several different business models, for distribution of content and more preferably also for payment for the distributed content. The business rules and data are preferably embodied in the security module. With regard to renewable or removable security modules, optionally such security modules may be "paired" to end user devices, such that the pairing relationship is established either in manufacture of the end user device and renewable security submodule, and/or through a connection to the network control center, or control center for distribution of the digital content. The pairing relationship may optionally be used to prevent the renewable and/or removable security module from being used with other end user devices.

In addition, business rules rights, credits and so forth are preferably maintained at the network control center. Optionally and more preferably, a requirement for periodic connections to the network control center by the end user device allows for synchronization and detection of pirate activity. One of the rules may optionally force the user to establish a connection from the end user device to the control network center on a periodic basis.

The combination of the local security module for the end user device, and the network control center at the central distribution point, enable the end user to more easily purchase or otherwise obtain content items, while still protecting the digital content against unauthorized access. Interpretation of business rules and conditions embodied in these various EMMs, ECMs and PECMs is preferably performed in the security module. The security module more preferably comprises a renewable security submodule, which most preferably is a smartcard, to enable its service in related or unrelated business applications, such as loyalty cards, purchase of non-digital content items, or any other use. For the removable and/or renewable security submodule, there is an option to exchange data between business applications, thus enabling transfer of credit, loyalty points and so forth from one business application to another. Preferably, the system would further feature a smartcard reader for reading the smartcard, which would be separate from the end user device. The data produced by the smartcard is readable by the smartcard reader, including data resulting from the slots, which is more preferably readable as a coded reply. For reasons of security, preferably direct outside readout of data stored on the smartcard is not permitted. Rather, a query received through the reader results in a coded reply.

The principles and operation of the present invention may be better understood with reference to the drawings and the accompanying description.

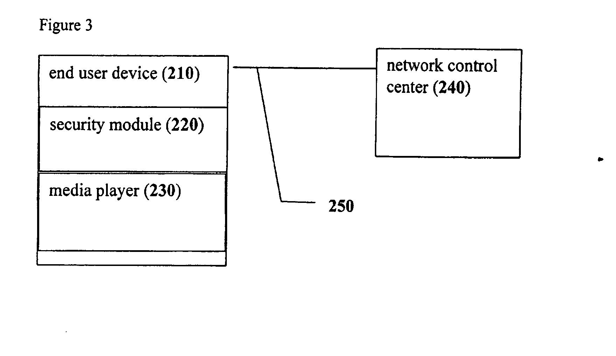

Referring now to the drawings, Figure 3 is a schematic block diagram of a system according to the present invention for secure and yet flexible delivery of digital content. Although the system is described with regard to audio content, it is understood that this is for the purposes of illustration only and is without any intention of being limiting in any way.

As shown, a system **200** features an end user device **210** with an associated security module **220.** End user device **210** also features a media player **230** for playing back or otherwise displaying at least one type of media content, such as audio content for example. End user device **210** is preferably in communication with a network control center **240** through a network **250.** Network **250** could be substantially any type of suitable network, including but not limited to, the Internet, a cable network or a satellite distribution mechanism.

Network control center **240** preferably controls access to the distributed content by end user device **210,** but more preferably does not solely control distribution of the content. Instead, network control center **240** is preferably capable of distributing content, whether through a broadcast mechanism to a plurality of end user devices **210,** or alternatively through a unicast mechanism to a specific end user device **210.** In addition, optionally and preferably, end user devices **210** are also capable of direct peer-to-peer distribution of the content. More preferably, network control center **240** does not control such peer-to-peer distribution of content between end user devices **210,** but does control access to the distributed content. Such control is preferably provided by requiring an end user device **210** which receives such content to contact network control center **240** before access to the content is possible. Optionally, however, access to a portion of the content may be permitted as "preview" or other introduction before contact is established with network control center **240.** For audio content, such a "preview" could optionally include a short length of played back audio data, while for a movie or other lengthier content, such a "preview" could optionally include a longer length of played back content.

More preferably, the distributed content is scrambled before distribution, and can only be accessed by an end user device **210** which possesses the proper code or codes. Most preferably, security module **220** must receive the proper code or codes, and is then able to transparently unscramble the received content for play back or other display of the content. These code(s) can most preferably only be received from network control center **240,** thereby enabling network control center **240** to maintain control over access to the distributed content.

Optionally and preferably, different portions of the distributed content are scrambled according to different types of scrambling mechanisms. For example, optionally and preferably, the digital content is encrypted in several parts, each one having a different encryption mode, such that different grades or classes of content are optionally contained within a single unit of content. One example of such a mode could optionally be "clear" or non-scrambled content. Another example is "free viewing", in which the content may optionally and preferably be scrambled, and is transmitted with an ECM that allows free access to all end user devices **210,** and more specifically, to security module **220** of each such end user device **210.** Such differential scrambling can optionally and preferably be used to enable a "free preview" function for particular (or all) audiences through their respective end user devices **210,** such that the end user could view a portion of the received content in order to determine whether to purchase such content, for example.

According to other preferred embodiments of the present invention, a plurality of different business models for purchasing and managing digital content is supported. Optionally and preferably, there are a plurality of basic distribution models: subscription, rental and "per item" purchase.

For the subscription model, preferably only members of "subscribed" groups are entitled to unscramble, and hence play back or otherwise display, of any digital content earmarked for end user devices **210** of these groups. Again, the subscription enables security module **220** to unscramble the digital content for each such end user device **210.** Obtaining a subscription preferably depends on payment of a subscription fee, which may optionally be a single, "one-time" fee, also optionally divided into term payments, or alternatively may only cover a time-limited subscription period. For any type of time-limited subscription, preferably each end user device **210** is only able to access or otherwise use the content for the period of time covered by the subscription, after which end user device **210** would preferably no longer be able to access the content. Such a limit to access by end user device **210** is optionally and more preferably implemented by providing a permission message and/or a code or key which is itself time-limited (as described in greater detail with regard to the implementation of a rental mechanism according to the present invention, for example). The subscription fee may optionally depend on any combination of group and individual subscriber properties, such as group affiliation or membership in other subscription groups for example.

Two special cases of this model are the "All" group case, and "zero subscription fee" case. A combination of these two cases amounts to "free content for all end user devices **210".**

For the second model, rental of digital content items, the access by the end user device may optionally be controlled according to time, number of times that the content item is displayed, or other rental parameters, for example. End user device **210** may optionally and more preferably store such information in a subfield of a purchase slot. This use of the purchase slots limits the number of rented pieces of content an end user device may store at any one time. For example, end user device **210** may optionally first receive a temporary key for accessing the scrambled digital content, which is sent from network control center **240.** The temporary key would preferably only be valid for a limited period of time, after which end user device **210** could no longer access the scrambled digital content, unless end user device **210** receives a permanent key. For example, the temporary key could optionally be an ECM, while the permanent key could optionally be a PECM.

For the third model, purchase of individual digital content items, an individual user may optionally and preferably purchase individual items or groups of items, with a variety of purchase mechanisms and methods. For example, the user may optionally be entitled to outright ownership of the digital content item, rental for a given period of time or a given number of renderings for play back or other display, and so forth. The purchase price may optionally be a function of any parameter within the system, including (but not limited to) group membership, other purchases, and time of purchase and/or download.

Both the subscription and "per item" purchase models, optionally with variations, may optionally and preferably co-exist within a single system, with parameters under control of network control center **240** and, to a certain extent, under the control of the user through end user device **210.** As previously noted, these parameters are more preferably stored in, and operated by, security module **220** of end user device **210,** or more preferably in removable security submodule, such as a smartcard for example (not shown).

It should be noted that both distribution models support superdistribution, in which content is delivered between end user devices **210,** rather than being sent from network control center **240,** with appropriate payment still being correctly distributed under the control of network control center **240.** Superdistribution, copy protection and media transfer, such as recording content in one end user device **210** and attempting to play this content in another end user device **210,** are all preferably subject to business rules which are set by network control center **240** for particular content, groups of users at end user devices **210,** or individual users at particular end user devices **210.**

Another form of superdistribution is for gifts, where the purchaser has paid for the rights and the content is delivered to end user device **210** of another user. One method would be to make the purchase from network control center **240** on behalf of the other end user device **210.** Network control center **240** would then send the content and appropriate code for accessing the content to the specific end user device **210** of the other user, and more preferably to security module **220** for that specific end user device **210.** or more preferably in the removable security submodule as previously described.

Preferably the following specific distribution modes are implemented for the digital content: free, in which the digital content is optionally not scrambled or encrypted; permitted for decryption or other unscrambling to all valid end user devices **210;** permitted for decryption or other unscrambling to end user devices **210** of subscribers, optionally according to their subscription level, for example for a group of subscribers; permitted for decryption or other unscrambling to a group of a plurality of end user devices **210,** such as for members of a family for example; and permitted for decryption or other unscrambling to a particular, individual end user device **210.** One significant advantage of the present invention is that all of these different distribution modes may optionally be maintained concurrently. Again, most preferably, these different distribution modes involve sending a code and/or other instructions to security module **220** for each end user device **210.**

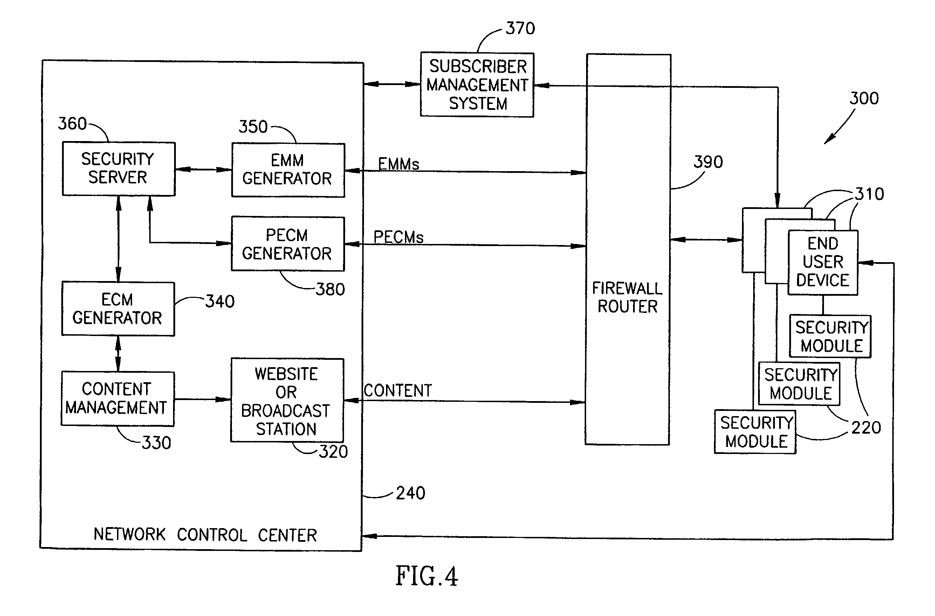

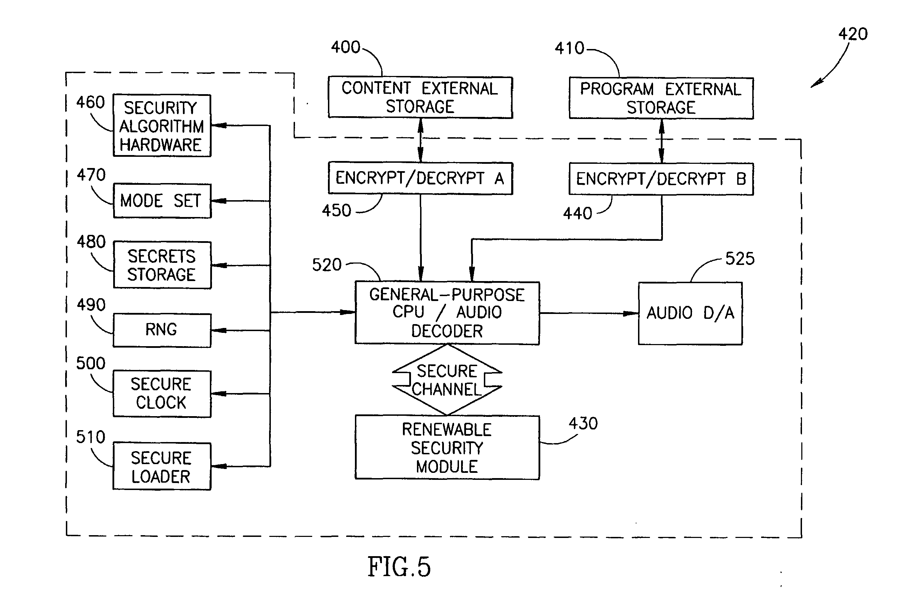

Figure 4 shows preferred embodiments of the system of Figure 3 according to the present invention. As shown, a system **300** according to the present invention features an end user device **310,** for which a more detailed preferred embodiment is illustrated in Figure 5 below. Briefly, end user device **310** is able to receive scrambled digital content and to unscramble the received digital content, if end user device **310** is authorized to do so. End user device **310** also preferably features security module **220,** as for Figure 3 above. End user device **310** may also optionally be implemented with a combination of media device **100,** IRD **110,** and removable security element **120** for security module **220,** such as a smart card for example, as shown in background art Figure 1 above. In this implementation, removable security element **120** is one example of a renewable security submodule, such as a smartcard for example.

Each end user device **310** receives the scrambled digital content from network control center **240,** which in this implementation includes all components behind a firewall **390.** Control over the distribution of content from network control center **240** is preferably located at a subscriber management system **370,** which determines the type of content which can be accessed by each end user device **310** and/or groups of end user devices **310.**

Preferably, the content is transmitted by a broadcast unit **320,** which is optionally implemented as a cable head end, for example, or alternatively as a Web server for serving Web pages, as another example. The Web server could also optionally serve other types of content as well, such as streaming video content for example, and is particularly preferred example for unicast distribution of content to a single end user device **310.** However, preferably, all end user devices **310** receive the same or substantially the same scrambled digital content from broadcast unit **320,** regardless of the implementation of broadcast unit **320,** such that the digital content can be stated to be broadcast or multicast. Another example for broadcast or multicast distribution is the transmission of digital television data over the appropriate channels. Superdistribution, or content transfer between end user devices **310** for peer-to-peer distribution, may be considered to be a sub-case of unidirectional distribution.

The broadcast digital content is scrambled in order to prevent access by unauthorized users through end user device **310.** Preferably, a content management unit **330** scrambles the digital content with an key to form scrambled content. More preferably, the scrambled digital content also features an ECM (entitlement control message), containing coded information for generating a control word in order to unscramble the digital content by end user device **310,** for example as described with regard to background art Figures 1 and 2 above. Each ECM is preferably generated by an ECM generator **340,** which is in communication with content management unit **330** as shown. More preferably, each ECM is also signed, and optionally and most preferably, is also encrypted.

Producing a key from the ECM, with which to scramble the distributed content, is more preferably performed through some type of one-way function, which most preferably receives at least a portion of the required input from the ECM. This one-way function is also most preferably shared by ECM generator **340** and security module **220,** yet is also preferably only known ECM generator **340** and security module **220** as a shared secret. Examples of suitable one-way functions are well known in the art (see for example "Applied Cryptography" by Bruce Schneier, John Wiley 2nd ed. 1996).

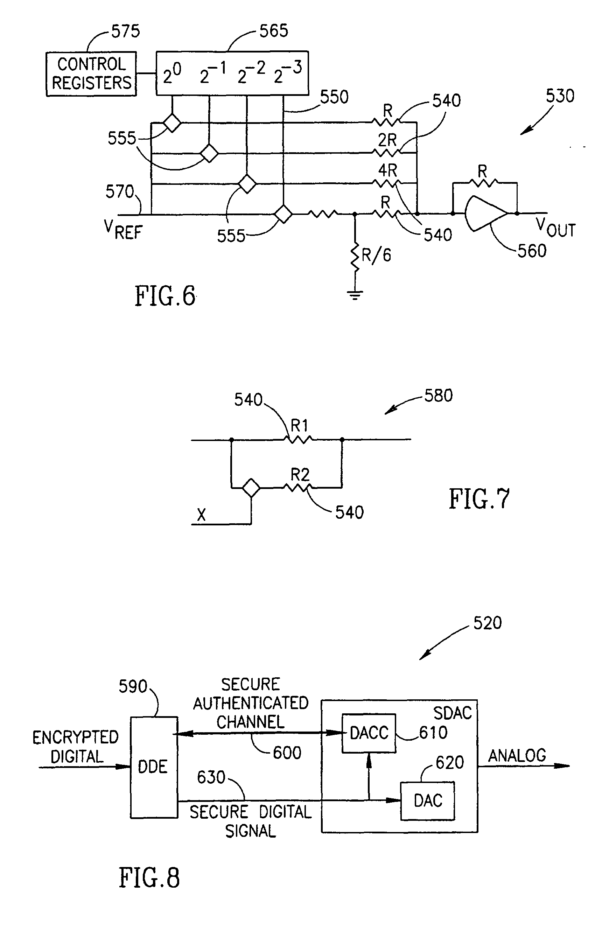

According to preferred embodiments of the present invention, content management unit **330** encrypts and/or scrambles, optionally "off-line" rather than on-demand or in "real time", all digital content files with a control word provided by ECM Generator **340.** Control management unit **330** may optionally then embed the actual ECM within the content. The control word is preferably derivable from the ECM using a method such as encryption or a one-way function as determined by security server **360.** In addition, security server **360** optionally contains a security mechanism with a replaceable algorithm synchronized with security module **220** in end user device **310,** as described in greater detail below with regard to Figure 6. Again, a preferred embodiment of security module **220,** or at least a preferred feature thereof, is a renewable security submodule, such as a smartcard for example (not shown). The renewable security submodule is itself preferably secured, such that information contained within this submodule is protected from unauthorized access.

Preferably, system **300** is implemented using two-tier encryption. The digital content to be delivered is optionally first encrypted by a "strong" algorithm A (for example, 3DES). while the key (or control word) for that particular algorithm is preferably encrypted by using one of several more time-consuming algorithms, according to the intended purpose of the particular piece.

The scrambling and/or encryption key or keys, preferably together with the metadata describing the content and its intended uses through the previously described ECM, are more preferably delivered in encrypted and signed packet(s), optionally together with the content, to end user device **310.** The whole message (content, keys and metadata) is more preferably signed, optionally using message digest or other special methods for efficiency of processing, to prevent message changing.

According to preferred embodiments of the present invention, each ECM is also broadcast with the broadcast scrambled digital content by network control center **240.** However, each end user device **310,** and more preferably security module **220,** is only able to use the ECM to generate the control word, or otherwise to unscramble the scrambled digital content, according to some type of authorization. Again, as previously described, more preferably the renewable security submodule component of security module **220** performs the generation of the control word, or otherwise unscrambles the digital content according to the authorization.

Preferably, the authorization is determined automatically by security module **220** of end user device **310** according to one or more EMMs (entitlement management messages), which optionally and more preferably are directed specifically to a particular end user device **310,** or at least to a class or group of such end user devices **310.** Each EMM determines the entitlement or "rights" of any particular end user device **310,** and/or of security module **220** for any such end user device **310,** to unscramble the scrambled digital content, more preferably by determining access to the coded information in the ECM. Each EMM is preferably created and transmitted by an EMM generator **350,** and may optionally be delivered separately or together with the scrambled digital content. More preferably, each EMM is signed by a security server **360,** for example at the time of creation of the particular EMM. Security server **360** also preferably creates keys with a high degree of randomization, and also signs control messages (such as ECMs and EMMs).

Optionally and most preferably, security module **220** of end user device **310,** and particularly most preferably the renewable security submodule thereof (not shown), compares at least one requirement in the received ECM to at least one entitlement in one or more of the received EMMs, to determine if there is a sufficient match. If so, security module **220** of end user device **310** then preferably automatically proceeds to derive the required coded information in the received ECM for unscrambling the scrambled digital content. If there is not a sufficient match, then end user device **310** preferably cannot immediately unscramble the digital content, but optionally may apply to a subscriber management system **370** for receiving the EMM, as described in greater detail below.

Each EMM is delivered in packets which may optionally be delivered either separately or together with a given content package (scrambled digital content). EMMs are more preferably encrypted and/or signed for use by an individual end user device **310** and/or by a group of such end user devices **310.**

According to preferred embodiments of the present invention, system **300** also features a PECM generator **380** for generating a PECM (Personal ECM). Each PECM that is associated with a given file or portion of digital content preferably generates the same control word for that given digital content. However, preferably only a particular end user device **310,** and more preferably security module **220** of such a particular end user device **310,** is able to generate the control word from the associated PECM, such that passing the PECM to a different end user device **310** preferably does not enable such a different end user device **310,** and/or security module **220** of such a different end user device **310,** to generate the clear, unscrambled digital content for play back or other types of display. Each PECM is also optionally and preferably signed by security server **360.**

The preferred feature of the PECM optionally and preferably enables a user to purchase, use and optionally and more preferably record, a plurality of different files or portions of digital content. Indeed, the PECM enables end user device **310** to support an almost unlimited number of such files or portions of digital content. Each PECM is preferably sent to a particular end user device **310,** and is then persistently stored at that end user device **310,** more preferably in association with the digital content that is unscrambled, decrypted or otherwise unlocked with that PECM. Furthermore, this particular implementation of the PECM according to the present invention is not taught by the background art, as it combines the provision of permanent storage at end user device **310** with personalized unscrambling through communication with a central authority, in this case network control center **240.** Background methods for permanent storage through end user device **310,** such as those taught by European Patent Application No. EP 0858184 for example, do not include such a requirement for communication with a central authority.

End user device **310** preferably replaces one or more ECMs, which are preferably transient and locked into a particular configuration on end user device **310,** with one or more PECMs which are also as secure but which act autonomously. More preferably, such a replacement process occurs when end user device **310** connects to subscriber management system **370,** or alternatively to PECM generator **380.** In any case, if the replacement process occurs through subscriber management system **370,** subscriber management system **370** should have a database (not shown) of end user devices **310** for which PECMs have been requested and generated, but not yet delivered. Hence, this connection may optionally effectively restore the number of content items that the user may purchase and store on end user device **310,** thereby enabling the user to order more such items.

According to preferred embodiments of the present invention, a number of different components of network control center **240** may optionally operate in conjunction in order for permanent storage of the content to be effected through the PECM. For example, the content, the ECM, the EMM and even the PECM could all optionally be distributed by broadcast unit **320.** However, optionally and preferably only the content is distributed by broadcast unit **320.** Optionally, ECM generator **340** distributes the ECM, PECM generator **380** distributes the PECM and EMM generator **350** distributes the EMM. More preferably, each type of message is sent from the respective generator to subscriber management system **370,** which then distributes the message to the correct end user device **310.** Most preferably, the ECM is distributed with the content by broadcast unit **320,** while the EMM and the PECM are distributed by subscriber management system **370.**

The use of PECM's overcomes a number of problems with background art content distribution mechanisms, as they enable permanent storage at an end user device **310** to be performed while still giving control to a central authority such as network control center **240,** for example. The requirement for permanent storage results from a typical limitation of end user devices **310,** and more specifically of security modules **220.** Briefly, security module **220** preferably features a secure storage memory for storing such information as records of purchases of content, more preferably featured in the renewable security submodule (not shown), such as a smartcard for example. For greater rapidity of access, more preferably the secure storage memory is implemented as a plurality of purchase slots, each of which holds the record for a particular purchase (for example, by being associated with a particular ECM). Such purchase slots are known in the art for various types of content purchases through a network, such as for "pay television" for example. However, they have the clear disadvantage of being limited on end user device **310,** or indeed for any other type of device, and therefore may become filled. Thus, clearing these purchase slots enables more purchases to be performed and recorded on the purchase slots.

In order for the purchase slots to be cleared, preferably end user device **310** must receive the PECM, such that end user device **310** more preferably should connect repeatedly to network control center **240** for such PECM's. As soon as the PECM is received by end user device **310,** preferably the relevant purchase slot is cleared of the corresponding ECM and/or the associated information, such that the PECM preferably replaces the ECM at end user device **310.** More preferably, only the PECM is required by end user device **310** for access to, and display of, the digital content.

Two possible frameworks for ensuring repeated connection from end user device **310** to PECM generator **380.** In the unicast domain, for example if broadcast unit **320** is implemented as a Web server, end user device **310** may optionally be forced to connect periodically to fetch EMMs and PECMs. In the broadcast domain, end user device **310** may optionally display a purchase meter (similar to the battery meter on laptop computers), which denotes the number of purchases remaining. When only a few purchase slots are remaining, the user may choose to reconnect end user device **310** to PECM generator **380** to reset the purchase meter to the maximum number of available purchase slots by replacing each corresponding ECM at a purchase slot by the relevant PECM, such that each cleared purchase slot can then potentially hold a file or a record of a purchase of digital content (see Figure 5 below for an explanation of such purchase slots).

According to preferred embodiments of this implementation of system **300,** as previously described, the original ECM optionally and preferably remains attached to the encrypted or otherwise scrambled digital content even after receipt of the PECM. This preferred embodiment is very important if the purchased digital content, together with attached ECMs and PECMs, are copied to another end user device **310.** The second end user device **310** would not be able to use the attached PECM, since this PECM is specific for the first end user device **310.** The second end user device **310** would then recognize the PECM as such, attempt to verify the PECM for unscrambling the digital content, and would then determine that the PECM is invalid for that end user device **310.** Next, the second end user device **310** would attempt to retrieve the embedded ECM and would then optionally perform various actions as indicated, for example by attempting to purchase the digital content from broadcast unit **320,** as described in greater detail below. In effect, this process results in superdistribution, wherein end user devices **310** themselves distribute the content, with subscriber management system **370** simply collecting the payment and reconciling accounts. However, it should be noted that the preferred requirement for maintaining the attachment of the ECM to the digital content is more preferably only intended to support superdistribution, such that the first end user device **310,** for which the PECM is relevant, preferably does not need to retain the ECM in order to access the digital content once the PECM has been received.

According to preferred embodiments of the present invention, in order to support "peer-to-peer" distribution or superdistribution between end user devices **310,** more preferably an end user device **310** which receives such content through this form of distribution also receives information about which network control center **240** should be contacted in order to obtain the requisite code or other permission message. Assuming that more than one such network control center **240** exists, more preferably the recipient end user device **310** either contacts such a network control center **240** which is the "regular" or "home" network control center **240** for that end user device **310,** or receives an address for the correct network control center **240** to be contacted for receiving the permission message. Such an address is optionally embedded in the ECM which is sent with the content itself.

According to other preferred embodiments of the present invention, the use of such entitlement messages supports a plurality of different business models for purchasing and managing digital content.

With regard to specific implementations with the entitlement message mechanism of the present invention, preferably the following specific distribution modes are implemented for the digital content: free, in which the digital content is optionally not scrambled or encrypted; permitted for decryption or other unscrambling to all valid end user devices **310;** permitted for decryption or other unscrambling to end user devices **310** of subscribers, optionally according to their subscription level, for example for a group of subscribers; and permitted for decryption or other unscrambling to a particular, individual end user device **310.** Again, most preferably, these different modes are actually supported by, and performed at, security module **220** of end user device **310.**

Each EMM supports these different distribution models by optionally authorizing each end user to receive free and/or subscription digital content, or to purchase paid "per item" digital content. This support is preferably accomplished by sending a CA Service ID that identifies the rights to a particular content item to each end user device **310.** End user device **310** then compares the CA service ID to such an ID of the digital content item as the digital content item is received.

For example, for free content, an EMM containing a common CA service ID is preferably distributed to all valid end user devices **310.** For subscription content, an EMM containing a specific CA Service ID is preferably delivered to end user devices **310** of all users who have subscribed to a particular service. The CA Service ID corresponds to the particular service which has been ordered through a subscription to subscriber management system **370.** Preferably, each unit of content delivered through the service has a specific CA Service ID for identifying that unit of content, which could optionally include for example, an identifier for identifying the particular subscription service generally and another identifier for identifying the specific unit in particular.

For paid "per item" digital content, a EMM containing a particular CA Service ID is preferably sent to end user devices **310** of all users who are authorized to purchase this item.

For the superdistribution model and/or automated purchase of "per item" content, preferably the ECM is embedded in the digital content, and includes information related to the fact that this digital content is purchasable. In addition, the ECM also more preferably contains both the unique ID (identifier) for that paid content and a CA service identifier for the group which is allowed to receive this paid content. The embedded ECM also preferably includes all of the information necessary to determine the price and business model(s) which applies to that purchase: for instance, rental duration and associated pricing, number of renderings and associated pricing and/or price for outright ownership.

For superdistribution and/or per item purchase, preferably a preview portion may be freely played back or otherwise displayed, according to the same mechanism as for rendering the paid content. However, upon reaching the ECM in the digital content which requires payment, the end user is more preferably required to purchase this content through some user friendly interface, such as a purchase button or other GUI gadget of end user device **310** for example. If authorized, upon purchase, end user device **310** securely marks this purchase, for example by marking a purchase slot containing the unique ID of the content concatenated with a unique ID of end user device **310** and/or of security module **220,** and/or of renewable security submodule within security module **220** (see Figure 5 below for an explanation). Upon play back or other display of this content after purchase, end user device **310** compares the unique content ID contained in the ECM of the digital content and the unique ID of end user device **310,** with the contents of the slots stored. If there is a match, the digital content is decrypted and rendered at the analog output.

This business model and technology is further supported through the optional but preferred provision of a sharing capability between members of a "family", whether actual or created for the purposes of sharing content between a plurality of specific end user devices **310.** In order for such sharing to be enabled, preferably a plurality of secure tokens, such as smartcards for example, are provided for deciphering PECMs encrypted to a common public key. Therefore, members of this group of end user devices **310** are all able to read the PECMs for the group. These tokens are designated "family members", and are associated with a particular group of end user devices **310.** With regard to the business model, more preferably end user devices **310** which belong to a family are therefore able to share digital content.

New end user devices **310** may optionally be added into a family, by creation of a secure channel between a current family member end user device **310** and a new family member end user device **310** through a secure device, or optionally through an on-line facility such as by communication with network control center **240.** For direct "peer-to-peer" communication through the secure channel, preferably such a channel is implemented through encryption with a handshake procedure. In this handshake procedure, more preferably a part of a secret key is exchanged by each end user device **310** involved in the handshake procedure.

On the other hand, in order to prevent unlimited proliferation of family members and/or of shared content between such members, such members and/or such shared content are preferably limited according to one or more "reasonableness rules". Many implementations of such rules are possible within the scope of the present invention. For example, there can optionally be a limit on the number of family members to which a token may belong. Also, generation marking within the tokens is optionally possible. There may also optionally be duplication limits for time, number of times content is played, and for cumulative play time for the content items. For example, a family member might only be able to make a certain number of copies of content, and/or might be restricted according to a period of time and/or end user device **310** activity between different instances of sharing of copies. More preferably, stricter limitations are placed on "second generation" family members which receive tokens and/or content from another family member. Family tokens may also optionally be registered in database, each having a unique ID. There may also optionally be an override of duplication limits, for example through communication with network control center **240** generally or subscription management system **370** specifically. Again, all of these different security functions at end user device **310** are preferably performed by security module **220,** and more preferably are performed by the renewable security submodule, as explained in greater detail below. These rules and security functions are intended to prevent commercially viable, illicit copying and distribution of content.

As shown with regard to Figure 5 below, the management of entitlements, for example through one or more of addition, removal, invalidation, and status polling thereof, is preferably performed on a separate, secure "renewable" means of storage and computation, such as a smartcard, which comprises a component of security module **220.** Thus the entitlements may be delivered via several paths, including those mechanisms that do not involve the play back or display functions of end user device **310** directly, for example when performed by separate payments.

As shown, a portion of end user device **310** features various security components, in addition to a content external storage device **400** and a program external storage device **410.** Content external storage device **400** stores the digital content which has been received by end user device **310.** Program external storage device **410** stores instructions for operating end user device **310.** Both content external storage device **400** and program external storage device **410** preferably operate such that unencrypted content is not present outside of end user device **310.** More preferably, in the implementation in which the components of Figure 5 are constructed in a single chip, the unencrypted or unscrambled content should not be present outside of such a single chip. Thus, external content memory in content external storage device **400** is encrypted (or scrambled), unencrypted data busses do not extend off-chip, and digital-to-analog conversion (D/A) is preferably performed on-chip.

The remaining components of end user device **310** which are shown in Figure 5 are intended for security, and together form a security module **420.** Preferably, security module **420** features a renewable and/or removable security submodule **430,** which could be a smart card for example. Security module **420** may optionally and preferably prevent end user device **310** from operating if renewable security submodule **430** is not present, for example through communication according to software program instructions between renewable security submodule **430** and end user device **310.** In addition, renewable security submodule **430** may also optionally and more preferably be constrained from operating with any other end user device **310.**

Since the content decoding algorithms (as well as the decryption algorithms) may change over time, at least a part of the program instructions are preferably downloadable to program external storage device **410.** Any program that can access any of the security-related software or data must not be amenable to a change by non-authorized users. Such program instructions must therefore preferably be loaded only through a secure loader, requiring knowledge of secret passwords and procedures. More preferably, such a process of loading the program instructions is performed through a Zero Knowledge Test - type authentication, such as Fiat-Shamir, as described for example with regard to US Patent Nos. 4,748,668 and 4,933,970.

External program memory in program external storage device **410,** and a bus **440** connecting program external storage device **410** to security module **420,** are preferably encrypted to deter unauthorized users from reading the program instructions. Also preferably, external content memory in content external storage device **400,** and a bus **450** connecting content external storage device **400** to security module **420,** are encrypted to deter unauthorized users from accessing the content. Since the encryption scheme and/or keyword for the content memory are more amenable to analysis than that of the more-critical program memory. the two schemes (or at least their keywords) more preferably differ.

In addition, more preferably each individual end user device **310** has an individual set of keywords, so that bus readout on two different end user devices **310** from busses **440** and/or **450,** would yield different results. This result may optionally be achieved by generating random keywords for each end user device **310** by final test machinery during production, and then burning-in these keywords into on-chip persistent memory at a secure storage **480** (see below for description in greater detail). Another option involves having a true random number generator on-board, generating random keywords

On-chip keyword generation is especially attractive if battery-backup volatile external memory is used, similar to the scheme used by Dallas Semiconductor Corp. (USA) for their "Soft Micro" line of secure microcontrollers (see for example the "Soft Microcontroller Data Book" from Dallas Semiconductor Corp.). These secure microcontrollers feature an external memory in which data is stored in an encrypted format, while the central processing unit stores the key for decrypting the encrypted data in a secure non-volatile storage which cannot be externally accessed. Therefore, the data remains protected. Each time new program information is to be loaded into the external memory, a random number generator which is associated with the central processing unit generates a random number, which then becomes the key for encrypting the data. These microcontrollers also have various firmware security features, for protecting the stored key.

In any event, keywords and other "secret" information must be stored on-chip, to avoid exposure to "line sniffing" or access by reading a bus from outside the chip.

In addition, as shown in Figure 5, security module **420** features an internal memory **460** for storing instructions for executing security algorithms, for example in order to accelerate certain computations such as DES or modulo arithmetic. Security module **420** also optionally and preferably features a mode set **470,** including mode set logic and hardware, which enables the same basic chipset to serve the varying requirements of system vendors. A typical implementation would contain one-time memory elements (OTP) or fuses, to force a particular chip into certain modes for providing different customers with different facilities, such as higher security to those customers who wish to pay for such higher security. The OTP and/or fuses could also optionally be used for a secret identifier for a particular chip.

An optional additional memory is secure memory **480,** for storing keywords and other secret information which is required for the operation of security module **420.** Secure memory **480** also optionally features a plurality of purchase slots, which are locations for holding the record of purchase for particular content. Alternatively and preferably, the plurality of purchase slots are maintained at renewable security submodule **430.** Each such slot can be rapidly accessed for recording the purchase. However, one disadvantage of using purchase slots is that they can become filled with the recorded purchases. The use of PECM control messages according to the present invention helps to overcome such a limitation on the number of slots. Alternatively, the purchase slots may also optionally be located at content external storage **400** and/or program external storage **410.**

Also, a random number generator **490** may also optionally be included, for generating random numbers in order to perform various security procedures. For example, as previously described, random number generator **490** may optionally be used for generating random numbers as keys for encrypting data for storage at content external storage **400** and/or program external storage **410.**

Optionally and more preferably, security module **420** also features a secure clock **500.** At the very least, secure clock **500** may actually optionally be implemented as a secure with specialized logic to prevent any decrementing or incrementing, or at least to prevent an untoward amount of such decrementing or incrementing, as at least a certain amount of alterations to the clock may occur through user error, for example. More preferably, secure clock **500** features a non-volatile internal memory with additional clock security to prevent unauthorized access, such that the clock cannot be reset to an earlier (or future) date to obtain some time - dependent rights.

Another optional but preferred component of security module **420** is a secure loader **510,** for loading new program instructions to program external storage device **410** for example. Secure loader **510** is more preferably implemented with a memory for storing instructions for performing a Zero Knowledge Test - type authentication, such as Fiat-Shamir for example, as previously described.

According to preferred embodiments of the present invention, the digital content is stored in an encrypted or scrambled form in content external storage device **400,** and is maintained in this form until the last possible physical and functional point before the content is played back or otherwise displayed to the user. Preferably, this last point occurs when the digital data is converted to a signal, for example when audio data is converted to the analog signal form for being played back through analog speakers to produce music or other sound.

In order to support decryption or unscrambling of this digital content at that point, the present invention preferably features a Secure Digital to Analog Converter (SDAC) **520,** an exemplary implementation of which is shown with regard to the schematic block diagrams of Figures 6-8. With SDAC **520,** any "sniffing" of the digital line or lines between the content unscrambler and an analog output device **525** would yield commercially unusable noise or severely distorted signal. The present invention therefore provides a secure device in which the scrambled content is unscrambled at the last physical point before "play back" or other display of the content. For example, for audio data, this last physical point occurs as the digital data is converted to an analog signal for play back. The present invention is able to perform such a conversion securely, such that the unscrambled content is not accessible outside of the secure device.

The current main obstacle to constructing a secure device that does not present any digital output of the unscrambled ("clear") content on any external lines stems from the current state of technology. High quality music reproduction, for example, requires about 24-bit resolution Digital to Analog Converters (DACs). Real-time decryption and decoding of encrypted compressed music files requires high processing power CPU, which is provided by the Decryption / Decompression Engine, or DDE. Placing these two components together on a single piece of silicon so that no clear digital data is available on exposed interchip lines results in coupling DDE electrical noise into the DAC analog output to a degree that results in unacceptable audio quality.

For this reason, all currently available background art high-quality DACs are built into chips (integrated circuits) that are physically separate from the high-speed CPU's. The result is that lines from DDE's to DACs carry clear digital content data, which correspond to the actual data, whether audio or other types of data. These insecure lines can be "sniffed" to extract the clear digital data. Thus, the background art relies upon separation of the decryption engine from the digital to analog converter component, in order to overcome the problem of excess noise generation.

Figure 6 shows a typical four bit digital to analog converter (DAC) **530** according to the background art, featuring a plurality of resistors **540** and resistor ladder elements **550,** or branches, to each of which a reference voltage is applied through an electronic switch 555. Each branch output voltage is zero if the corresponding switch **555** is open, and a certain (fixed) value in case it is closed. These voltages are summed in an amplifier **560** to produce the DAC output voltage for DAC **530.** A "Single-Sided" DAC (that is, 0 to Vmax volts output, rather than ± Vmax) is shown for convenience, without the numerous auxiliary circuits involved.

DAC **530** also includes an input digital interface **565,** which may optionally be implemented as parallel or serial, in any of several standard formats which are known to one of ordinary skill in the art, which accepts digital values to be converted. An input digital value is defined by a number of binary digits (bits), each of which may be either "0" or "1". Input digital interface **565** directs each of these bits to the appropriate switch **555.** Input digital interface **565** also preferably features a plurality of control registers **575** for controlling input to input digital interface **565.**

Resistors **540** are adjusted so that each branch produces a binary-weighted voltage value corresponding to the binary position of the bit that actuates switch **555** for the branch. Binary weighted resistors **540** are preferred for the precision weighing resistors since any number of such weighted resistors **540** can then optionally and preferably be combined in sequence. Thus the sum of these voltages seen at output amplifier **560** is equal to a reference voltage **570** times the input digital value.

Conventionally, the relative "weights" of the various bits of the combination of resistors **540** and switches **555** of DAC **530** correspond to integral powers of two, such that the output voltage value corresponds exactly to the input binary word, except for the effects of (unwanted) non-linearities, noise and other undesirable effects. Thus, the ideal analog output voltage value corresponding to a N-bit digital input X is Vref *∑ᵢ {2⁻ⁱ * Xᵢ}, where i is the position of binary digit within the input word (from I to N), Xi is the value of the i-th binary digit (0 or 1), and Vref is the DAC reference voltage. This input/output relationship is known, linear and constant.

Non-linear DACs exist for special applications such as extending the output range without loss of resolution over a limited sub-range. In such DACs the relationship between the digital input word and the voltage output follows a non-linear function, but that function is known and constant, and in line with required accuracy.

Another conventional DAC form is the "one-bit" DAC, or more accurately "delta-sigma modulator with one bit DAC", as shown with regard to Figure 7. A one-bit DAC **580** produces an analog voltage value by generating a high-frequency waveform whose instantaneous values are one of either of two known fixed numbers, through one of two resistors **540.** These numbers ("step-up" and "step down"), are conveniently designated "0" and "1", but quite often are opposite-polarity, equal-amplitude values. The waveform averages, through a suitable filter, to the required instantaneous voltage.

To reduce DAC output noise, it is important to keep the number of high-speed switches within the converter chip to a minimum, and have the necessary switching done in a synchronous manner. Similar considerations apply when the digital input to the DAC chip is serial rather than the parallel scheme just described.

In order to provide a fully secure DAC, SDAC **520** (shown in Figure 8) according to the present invention includes a number of features which are not implemented in the background art, thereby improving on the functionality of the two DAC implementations of Figures 6 and 7. First, the encrypted or scrambled digital content is received by a Decryption / Decompression Engine (DDE) **590,** which could optionally be security module **420,** for decrypting or otherwise unscrambling the digital content, as previously described. Of course, SDAC **520** could also optionally be used with other types of content processors. DDE **590** is connected to SDAC **520** through a secure authenticated channel **600,** which preferably is directly in communication with a CPU / cryptographic engine (DACC) **610.** More preferably, both parts of the SDAC **520** (DACC **610** and DAC **620**) are on the same chip, for security reasons. However, in order to avoid CPU-related noise effects, DACC **610** is preferably used only at low speed (or not at all) during the digital to analog conversion process as performed by a DAC **620,** thereby avoiding degradation of DAC performance. Thus, the present invention avoids the drawbacks of the background art by separating the operation of the decryption engine from the operation of the digital to analog converter in time, rather than in space, as for the background art.

Although DAC **620** itself may optionally be implemented according to any one of a number of different background art implementations, the input-output transfer function of DAC **620** is settable by DACC **610.** The settings are so designed that there is no (or minimal) asynchronous switching during use. The variety of settings is such that it would be extremely difficult to extract the original (binary-weighted) digital word corresponding to an output voltage, given a limited number of observed SDAC digital inputs and analog output voltage measurement.

According to preferred embodiments of SDAC **520,** secure authenticated channel **600** is established between DACC **610** and DDE **590** through a cryptographic mechanism, in which DACC **610** and DDE **590** exchange keys, during a short "setup session" at the beginning of a play back period. Such cryptographic mechanisms are known in the art and could easily be implemented by one of ordinary skill in the art (see for example "Applied Cryptography" by Bruce Schneier, John Wiley 2nd ed. 1996, particularly *AKE: authenticated key exchange* in Chapter 3 pg 47; and "Handbook of Applied Cryptography" by A. Menezes, P. Oorchot, and S.A. Vanstore, CRC Press , 1997, particularly *Secure Channel* on pg. 13, and *AKE* in Chapter 12 pg 489). No content is played during the setup session, so DACC **610** can be in full operation and negotiate the transfer function parameters for the upcoming play back period without any noise effect on DAC **620..** Conversely, full-speed operation of DACC **610** is not required during the play back period when DAC **620** is performing its main function of digital to analog conversion, as previously described. Thus, the functionality of DACC **610** and DAC **620** are separated in time rather than in space.

The actual digital data is then preferably transferred through a digital signal channel **630,** which although shown separately from secure authenticated channel **600** in Figure 8, may optionally actually share the same physical lines. Typically, secure authenticated channel **600** is initiated by DDE **590.**

Once secure authenticated channel **600** is established, DACC **610** preferably proposes a randomly selected set of SDAC parameters. One example of such parameters is the differential weighting of resistors **540** (see Figures 6 and 7) according to a non-linear function, which could optionally be performed with any number of such resistors **540,** even for a linear one-up/one-down system, as for Figure 7 for example, as described in greater detail below. The weights would then optionally be chosen as the SDAC parameters. These parameters are preferably different for each pair of DDE **590** and DACC **610,** and more preferably are different for each unscrambling operation of DDE **590** and DACC **610.** However, it should be noted that the distribution of scrambled digital content is preferably performed such that all end user devices receive exactly the same scrambled content, to preserve distribution bandwidth. These two goals are preferably achieved by having DDE **590** first unscramble the received, scrambled digital content, and then rescramble the digital content according to the different set of parameters which had been established with DACC **610.**

Once accepted, both DDE **590** and DACC **610** use the same set of parameters to achieve an overall linear transfer function. On the source side for DDE **590,** these parameters are used to modify the binary words transmitted to SDAC **520** for play back. The modification may optionally be carried either in the DDE software (DAC driver) in DDE **590** or alternatively or additionally in special-purpose hardware.

On the receiving side for SDAC **520,** DACC **610** sets registers to control the operation of DAC **620,** and than preferably effectively shuts itself off. Alternatively, DACC **610** may go into a reduced mode of operation so that its spurious (noise) effects on DAC **620** are within acceptable limits.

Control registers **575** for DAC **620** may optionally and preferably affect DAC operation according to any of the following combinations, and variations, as determined by the received parameters as previously described. For example, the bit order of the input word can optionally be shuffled. For a 24-bit DAC, the number of combinations is on the order of 10²³. In addition, non-binary weighted resistor values can optionally be used, as shown with regard to Figure 7, to create non-linear converter bit "weights". It should be noted that since the binary weight scheme is the most efficient, the number of bits in the non-binary-weighted converter must be increased to cover the same range. At the same time, rather small deviations from correct binary weights (due to resistor **540** R2 in the example given) may cause enough distortion to make the content commercially unusable. Small deviations lead to a small number of additional bits required, and minimize requirements on the deviation resistor and/or switch.

As another example, simple cryptographic functions may optionally be used, which may be achieved by any number of methods that do not impose excessive noise on the analog output. For example, an XOR operation can optionally be performed with the output of a Linear Feedback Shift Register.

Furthermore, although SDAC **520** is described in terms of a parallel DAC architecture, the same principle can be applied to any other DAC type. In particular, application of non-binary weighted resistor values to a one-bit DAC may be achieved by using unequal step-up and the step-down voltages.

Also, ancillary functions like calibration, control, inter-chip bus structure and standards, unprotected operation modes, and handling element inaccuracy have not been described, as these elements are well known in the art and could easily be implemented by one of ordinary skill in the art.

## Claims

1. A method for securing digital content for transmission to an end user device (310), comprising:
(a) providing a control center (240) for controlling access to the digital content by the end user device (310);
(b) transmitting scrambled digital content to the end user device (310), such that the end user device (310) cannot play back said scrambled digital content;
(c) after transmitting said scrambled digital content to the end user device (310), the end user device (310) contacting said control center to request a personal ECM, (PECM) said PECM being specific to the end user device (310);
(d) in response to the end user device (310) contacting said control center (240), transmitting said PECM to the end user device (310) by said control center (240); and
(e) unscrambling said scrambled digital content by the end user device (310) according to said PECM.

2. The method of claim 1, wherein steep (b) further comprises the steps of:
(i) transmitting a first set of information in an entitlement control message (ECM) for decoding said scrambled digital content to the end user device (310);
(ii) permitting the end user device (310) to access said first set of information only if an entitlement management message (EMM) is given to the end user device (310) and said EMM indicates that the end user device (310) is permitted to use said ECM; and
(iii) unscrambling said scrambled digital content by the end user device (310) according to said first set of information.

3. The method of claim 2, wherein said EMM is transmitted by said control center (240).

4. The method of claims 2 or 3, further comprising the step of:
(iv) replacing said ECM with said PECM for unscrambling said scrambled digital content by the end user device (310).

5. The method of any of claims 2-4, wherein said first set of information includes at least one instruction for generating a code word, such that step (ii) includes the steps of:
(1) generating said code word according to said at least one instruction; and
(2) unscrambling said scrambled digital content according to said code word.

6. The method of any of claims 1-5, further comprising the step of:
(f) permanently associating said PECM with said scrambled digital content to permit unscrambling of said scrambled digital content by the end user device (310).

7. The method of claim 6, further comprising the steps of:
(g) transmitting said scrambled digital content with said ECM from a first end user device (310) to a second end user device (310);
(h) receiving a specific PECM by said second end user device (310) from said control center (240); and
(i) unscrambling said scrambled digital content by said second end user device (310) only after receiving said specific PECM.

8. The method of claim 7, wherein step (h) includes the steps of:
(i) transmitting payment to said control center (240); and
(ii) transmitting said PECM by said control center (240) only after receiving payment.

9. A system (300) for securing digital content for transmission, comprising:
(a) a control center (240) for controlling access to the digital content;
(b) an end user device (210, 310) for receiving scrambled digital content, the end user device (210, 310) being adapted to, after receiving said scrambled digital content, contact said control center (240) to request a personal ECM (PECM), said PECM being specific to the end user device (310);
wherein the control center (240) is adapted to transmit said PECM to the end user device (310) in response to the end user device (310) contacting said control center (240); and
the end user device (210, 310) is adapted to unscramble said scrambled digital content according to said PECM.

10. The system (300) of claim 9, further comprising:
(c) a permission message generator for generating a permission message for transmission to said end user device (210, 310), said permission message generator comprising a PECM generator (380) for generating said PECM, said PECM forming a portion of said permission message, such that said end user device (210, 310) unscrambles said scrambled digital content only after said permission message is at least received by said end user device (210, 310);
(d) a subscription management system (370) for controlling said permission message generator to determine whether said permission message is generated; and
(e) a network (250) for connecting said end user device (210, 310), said control center (240), said permission message generator and said subscription management system (370).

11. The system (300) of claims 9 or 10, wherein said permission message generator sends said permission message to said subscription management system (370), and said subscription management system (370) transmits said permission message to said end user device (210,310).

12. The system (300) of any of claims 9-11, wherein said permission message generator further comprises: an entitlement control message (ECM) generator (340) for generating an ECM, said ECM forming another portion of said permission message.

13. The system (300) of claim 12, wherein said end user device (210) further comprises a security module (220) for receiving said ECM and said PECM, and for unscrambling said scrambled digital content for playing back the digital content upon receipt of at least one of said ECM and said PECM.

14. The system (300) of claim 13, wherein said security module (220) further comprises a renewable security submodule, said renewable security submodule being removable and replaceable.

15. The system (300) of claim 14, wherein said renewable security submodule comprises a smartcard.

16. The system (300) of any of claims 13-15, wherein said security module features a limited number of slots for being associated with a plurality of ECMs, such that if said limited number of slots are used, a PECM corresponding to at least one stored ECM must be received before an additional ECM is received by said end user device (210).

17. The system (300) of claim 16, wherein information concerning said slots is stored on said security module.

18. The system (300) of any of claims 15-17, further comprising a smartcard reader for reading said smartcard, said smartcard reader being separate from said end user device (210), such that data produced by said smartcard is readable by said smartcard reader, including data resulting from said slots, said data being readable as a coded reply.

## Patentansprüche

1. Verfahren zum Sichern von digitalem Inhalt für Übertragung zu einer Endbenutzervorrichtung (310), umfassend:
(a) Bereitstellen eines Steuerungszentrums (240) zum Steuern des Zugangs zu dem digitalen Inhalt durch die Endbenutzervorrichtung (310);
(b) Übertragen von verwürfeltem digitalem Inhalt an die Endbenutzervorrichtung (310) derart, dass die Endbenutzervorrichtung (310) den verwürfelten digitalen Inhalt nicht wiedergeben kann;
(c) nach der Übertragung des verwürfelten digitalen Inhalts an die Endbenutzervorrichtung (310), Kontaktieren, durch die Endbenutzervorrichtung (310), des Steuerungszentrums zum Anfordern einer persönlichen ECM (PECM), die für die Endbenutzervorrichtung (310) spezifisch ist;
(d) als Reaktion darauf, dass die Endbenutzervorrichtung (310) das Steuerungszentrum (240) kontaktiert, Übertragen der PECM an die Endbenutzervorrichtung (310) durch das Steuerungszentrum (240); und
(e) Entwürfeln des verwürfelten digitalen Inhalts durch die Endbenutzervorrichtung (310) gemäß der PECM.

2. Verfahren nach Anspruch 1, wobei Schritt (b) die folgenden Schritte umfasst:
(i) Übertragen eines ersten Satzes von Informationen in einer Zugriffssteuerungsmeldung (ECM) zum Decodieren des verwürfelten digitalen Inhalts an die Endbenutzervorrichtung (310);
(ii) Gestatten, dass die Endbenutzervorrichtung (310) auf den ersten Satz von Informationen zugreift, nur dann, wenn eine Zugriffsverwaltungsmeldung (EMM) an die Endbenutzervorrichtung (310) gegeben wird und die EMM angibt, dass der Endbenutzervorrichtung (310) gestattet ist, die ECM zu verwenden; und
(iii) Entwürfeln des verwürfelten digitalen Inhalts durch die Endbenutzervorrichtung (310) gemäß dem ersten Satz von Informationen.

3. Verfahren nach Anspruch 2, wobei die EMM durch das Steuerungszentrum (240) übertragen wird.

4. Verfahren nach Anspruch 2 oder 3, weiter den folgenden Schritt umfassend:
(iv) Ersetzen der ECM durch die PECM zum Entwürfeln des verwürfelten digitalen Inhalts durch die Endbenutzervorrichtung (310).

5. Verfahren nach einem der Ansprüche 2-4, wobei der erste Satz von Informationen mindestens eine Anweisung zum Erzeugen eines Wortcodes derart enthält, dass Schritt (ii) die folgenden Schritte enthält:
(1) Erzeugen des Wortcodes gemäß der mindestens einen Anweisung; und
(2) Entwürfeln des verwürfelten digitalen Inhalts gemäß dem Wortcode.

6. Verfahren nach einem der Ansprüche 1-5, weiter den folgenden Schritt umfassend:
(f) permanentes Assoziieren der PECM mit dem verwürfelten digitalen Inhalt, um Entwürfeln des verwürfelten digitalen Inhalts durch die Endbenutzervorrichtung (310) zu gestatten.

7. Verfahren nach Anspruch 6, weiter die folgenden Schritte umfassend:
(g) Übertragen des verwürfelten digitalen Inhalts mit der ECM von einer ersten Endbenutzervorrichtung (310) an eine zweite Endbenutzervorrichtung (310);
(h) Empfangen einer spezifischen PECM durch die zweite Endbenutzervorrichtung (310) von dem Steuerungszentrum (240); und
(i) Entwürfeln des verwürfelten digitalen Inhalts durch die zweite Endbenutzervorrichtung (310) nur nach Empfang der spezifischen PECM.

8. Verfahren nach Anspruch 7, wobei Schritt (h) die folgenden Schritte enthält:
(i) Übertragen von Bezahlung an das Steuerungszentrum (240); und
(ii) Übertragen der PECM durch das Steuerungszentrum (240) nur nach Empfang der Bezahlung.

9. System (300) zum Sichern von digitalem Inhalt für Übertragung, umfassend:
(a) ein Steuerungszentrum (240) zum Steuern des Zugangs zu dem digitalen Inhalt;
(b) eine Endbenutzervorrichtung (210, 310) zum Empfangen von verwürfeltem digitalem Inhalt, wobei die Endbenutzervorrichtung (210, 310) angepasst ist, um, nach Empfang des verwürfelten digitalen Inhalts, das Steuerungszentrum (240) zu kontaktieren, um eine persönliche ECM (PECM), die für die Endbenutzervorrichtung (310) spezifisch ist, anzufordern;
wobei das Steuerungszentrum (240) angepasst ist, um die PECM als Reaktion darauf, dass die Endbenutzervorrichtung (310) das Steuerungszentrum (240) kontaktiert, an die Endbenutzervorrichtung (310) zu übertragen; und
die Endbenutzervorrichtung (210, 310) angepasst ist, um den verwürfelten digitalen Inhalt gemäß der PECM zu entwürfen.

10. System (300) nach Anspruch 9, weiter umfassend:
(c) einen Erlaubnismeldungsgenerator zum Erzeugen einer Erlaubnismeldung für Übertragung an die Endbenutzervorrichtung (210, 310), wobei der Erlaubnismeldungsgenerator einen PECM-Generator (380) zum Erzeugen der PECM umfasst, wobei die PECM einen Teil der Erlaubnismeldung derart bildet, dass die Endbenutzervorrichtung (210, 310) den verwürfelten digitalen Inhalt nur entwürfelt, nachdem die Erlaubnismeldung durch die Endbenutzervorrichtung (210, 310) zumindest empfangen wird;
(d) ein Teilnahmeverwaltungssystem (370) zum Steuern des Erlaubnismeldungsgenerators, um zu bestimmen, ob die Erlaubnismeldung erzeugt wird; und
(e) ein Netz (250) zum Verbinden der Endbenutzervorrichtung (210, 310), des Steuerungszentrums (240), des Erlaubnismeldungsgenerators und des Teilnahmeverwaltungssystems (370).

11. System (300) nach Anspruch 9 oder 10, wobei der Erlaubnismeldungsgenerator die Erlaubnismeldung an das Teilnahmeverwaltungssystem (370) sendet und das Teilnahmeverwaltungssystem (370) die Erlaubnismeldung an die Endbenutzervorrichtung (210, 310) überträgt.

12. System (300) nach einem der Ansprüche 9-11, wobei der Erlaubnismeldungsgenerator weiter umfasst: einen Zugriffssteuerungsmeldungs-(ECM)-Generator (340) zum Erzeugen einer ECM, wobei die ECM einen anderen Teil der Erlaubnismeldung bildet.

13. System (300) nach Anspruch 12, wobei die Endbenutzervorrichtung (210) weiter ein Sicherheitsmodul (220) zum Empfangen der ECM und der PECM und zum Entwürfeln des verwürfelten digitalen Inhalts zum Wiedergeben des digitalen Inhalts nach Empfang von zumindest einer der ECM und der PECM umfasst.

14. System (300) nach Anspruch 13, wobei das Sicherheitsmodul (220) weiter ein erneuerbares Sicherheitsuntermodul umfasst, wobei das erneuerbare Sicherheitsuntermodul entfernbar und ersetzbar ist.

15. System (300) nach Anspruch 14, wobei das erneuerbare Sicherheitsuntermodul eine Smartcard umfasst.

16. System (300) nach einem der Ansprüche 13-15, wobei das Sicherheitsmodul eine begrenzte Zahl von Steckplätzen aufweist, die mit einer Vielzahl von ECMs derart zu assoziieren sind, dass, wenn die begrenzte Zahl von Steckplätzen verwendet wird, eine PECM, die mit mindestens einer gespeicherten ECM korrespondiert, empfangen werden muss, bevor eine zusätzliche ECM von der Endbenutzervorrichtung (210) empfangen wird.

17. System (300) nach Anspruch 16, wobei Informationen bezüglich der Steckplätze in dem Sicherheitsmodul gespeichert sind.

18. System (300) nach einem der Ansprüche 15-17, weiter einen Smartcard-Leser zum Lesen der Smartcard umfassend, wobei der Smartcard-Leser derart von der Endbenutzervorrichtung (210) getrennt ist, dass Daten, die von der Smartcard produziert werden, von dem Smartcard-Leser lesbar sind, einschließlich von Daten, die von den Steckplätzen resultieren, wobei die Daten als eine codierte Antwort lesbar sind.

## Revendications

1. Procédé de sécurisation de contenu numérique pour une transmission vers un dispositif d'utilisateur final (310), comprenant les étapes consistant à :
a) pourvoir un centre de contrôle (240) pour contrôler l'accès au contenu numérique par le dispositif d'utilisateur final (310) ;
b) transmettre un contenu numérique brouillé au dispositif d'utilisateur final (310), de telle manière que le dispositif d'utilisateur final (310) ne puisse pas lire ledit contenu numérique brouillé ;
c) après avoir transmis ledit contenu numérique brouillé au dispositif d'utilisateur final (310), faire que le dispositif d'utilisateur final (310) contacte ledit centre de contrôle pour demander un ECM personnel (PECM), ledit PECM étant spécifique au dispositif d'utilisateur final (310) ;
d) en réponse au dispositif d'utilisateur final (310), contacter ledit centre de contrôle (240), transmettre ledit PECM au dispositif d'utilisateur final (310) par ledit centre de contrôle (240) ; et
e) débrouiller ledit contenu numérique brouillé par le dispositif d'utilisateur final (310) conformément audit PECM.

2. Procédé selon la revendication 1, dans lequel l'étape (b) comprend en outre les étapes consistant à :
i. transmettre un premier jeu d'informations dans un message de contrôle de droits (ECM) pour décoder ledit contenu numérique brouillé vers le dispositif d'utilisateur final (310) ;
ii. permettre au dispositif d'utilisateur final (310) d'accéder audit premier jeu d'informations uniquement si un message de gestion des droits (EMM) est donné au dispositif d'utilisateur final (310) et si l'EMM indique que le dispositif d'utilisateur final (310) est autorisé à utiliser ledit ECM ; et
iii. débrouiller ledit contenu numérique brouillé par le dispositif d'utilisateur final (310) conformément audit premier jeu d'informations.

3. Procédé selon la revendication 2, dans lequel ledit EMM est transmis par ledit centre de contrôle (240).

4. Procédé selon les revendications 2 ou 3, comprenant en outre l'étape consistant à :
iv. remplacer ledit ECM par ledit PECM pour débrouiller ledit contenu numérique brouillé par ledit dispositif d'utilisateur final (310).

5. Procédé selon l'une quelconque des revendications 2 à 4, dans lequel ledit premier jeu d'informations comprend au moins une instruction pour générer un mot code, tel que l'étape (ii) comprend les étapes consistant à :
1) générer ledit mot de code conformément à ladite au moins une instruction ; et
2) débrouiller ledit contenu numérique brouillé conformément audit mot de code.

6. Procédé selon l'une quelconque des revendications 1 à 5, comprenant en outre l'étape consistant à :
a) associer de manière permanente ledit PECM audit contenu numérique brouillé pour permettre le débrouillage dudit contenu numérique brouillé par le dispositif d'utilisateur final (310).

7. Procédé selon la revendication 6, comprenant en outre les étapes consistant à :
b) transmettre ledit contenu numérique brouillé avec ledit ECM depuis un premier dispositif d'utilisateur final (310) à un second dispositif d'utilisateur final (310) ;
c) recevoir un PECM spécifique par ledit second dispositif d'utilisateur final (310) depuis ledit centre de contrôle (240) ; et
d) débrouiller ledit contenu numérique brouillé par ledit second dispositif d'utilisateur final (310) uniquement après avoir reçu ledit PECM spécifique.

8. Procédé selon la revendication 7, dans lequel l'étape (h) comprend les étapes consistant à :
i. transmettre un paiement audit centre de contrôle (240) ; et
ii. transmettre ledit PECM par ledit centre de contrôle (240) uniquement après réception du paiement.

9. Système (300) de sécurisation de contenu numérique pour une transmission, comprenant :
a) un centre de contrôle (240) pour contrôler l'accès au contenu numérique ;
b) un dispositif d'utilisateur final (210, 310) pour recevoir un contenu numérique brouillé, le dispositif d'utilisateur final (210, 310) étant adapté pour, après réception dudit contenu numérique brouillé, contacter ledit centre de contrôle (240) pour demander un ECM personnel (PECM), ledit PECM étant spécifique au dispositif d'utilisateur final (310) ;
dans lequel le centre de contrôle (240) est adapté pour transmettre ledit PECM au dispositif d'utilisateur final (310) en réponse au dispositif d'utilisateur final (310) contactant ledit centre de contrôle (240) ; et
le dispositif d'utilisateur final (210, 310) est adapté pour débrouiller ledit contenu numérique brouillé conformément audit PECM.

10. Système (300) selon la revendication 9, comprenant en outre :
(c) un générateur de messages d'autorisation pour générer un message d'autorisation pour une transmission vers ledit dispositif d'utilisateur final (210, 310), ledit générateur de messages d'autorisation comprenant un générateur PECM (380) pour générer ledit PECM, ledit PECM formant une partie dudit message d'autorisation, de telle manière que ledit dispositif d'utilisateur final (210, 310) débrouille ledit contenu numérique brouillé uniquement après que ledit message d'autorisation a été au moins reçu par ledit dispositif d'utilisateur final (210, 310) ;
(d) un système de gestion d'abonnement (370) pour contrôler ledit générateur de messages d'autorisation pour déterminer si ledit message d'autorisation est généré ; et
(e) un réseau (250) pour connecter ledit dispositif d'utilisateur final (210, 310), ledit centre de contrôle (240), ledit générateur de messages d'autorisation et ledit système de gestion d'abonnement (370).

11. Système (300) selon les revendications 9 ou 10, dans lequel ledit générateur de messages d'autorisation envoie ledit message d'autorisation audit système de gestion d'abonnement (370), et ledit système de gestion d'abonnement (370) transmet ledit message d'autorisation audit dispositif d'utilisateur final (210, 310).

12. Système (300) selon les revendications 9 à 11, dans lequel ledit générateur de messages d'autorisation comprend en outre : un générateur de messages de contrôle des droits (ECM) (340) pour générer un ECM, ledit ECM formant une autre partie dudit message d'autorisation.

13. Système (300) selon la revendication 12, dans lequel ledit dispositif d'utilisateur final (210) comprend en outre un module de sécurité (220) pour recevoir ledit ECM et ledit PECM, et pour débrouiller ledit contenu numérique brouillé pour lire le contenu numérique à la réception d'au moins un message parmi ledit ECM et ledit PECM.

14. Système (300) selon la revendication 13, dans lequel ledit module de sécurité (220) comprend en outre un sous-module de sécurité renouvelable, ledit sous-module de sécurité renouvelable étant renouvelable et remplaçable.

15. Système (300) selon la revendication 14, dans lequel ledit sous-module de sécurité renouvelable comprend une carte à puce.

16. Système (300) selon l'une quelconque des revendications 13 à 15, dans lequel ledit module de sécurité comprend un nombre limité d'intervalles pour être associé avec une pluralité d'ECM, de telle manière que si ledit nombre limité d'intervalles est utilisé, un PECM correspondant à au moins un ECM stocké doit être reçu avant qu'un ECM soit reçu par ledit dispositif d'utilisateur final (210).

17. Système (300) selon la revendication 16, dans lequel des informations concernant lesdits intervalles sont stockées sur ledit module de sécurité.

18. Système (300) selon l'une quelconque des revendications 15 à 17, comprenant en outre un lecteur de cartes à puce pour lire ladite carte à puce, ledit lecteur de cartes à puce étant séparé dudit dispositif d'utilisateur final (210), de telle manière que des données produites par ladite carte à puce soient lisibles par un lecteur de cartes à puce, y compris les données résultant desdits intervalles, lesdites données étant lisibles sous la forme d'une réponse codée.
